Europäisches Patentamt

European Patent Office

Office européen des brevets

(11) Veröffentlichungsnummer: **0 198 457**
**A1**

(12) **EUROPÄISCHE PATENTANMELDUNG**

(21) Anmeldenummer: **86105071.4**

(22) Anmeldetag: **14.04.86**

(51) Int. Cl.⁴: **A 47 J 41/02**

(30) Priorität: **17.04.85 DE 3513865**

(43) Veröffentlichungstag der Anmeldung: **22.10.86**
**Patentblatt 86/43**

(84) Benannte Vertragsstaaten: **AT BE CH DE FR GB IT LI LU NL SE**

(71) Anmelder: **Rotpunkt Dr. Anso Zimmermann, Industriestrasse, D-6434 Niederaula / Bad Hersfeld (DE)**

(72) Erfinder: **Zimmermann, Anso, Dr., Königsbergerstrasse 11, D-6434 Niederaula (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

(54) **Isolierkanne mit abgedichtetem Deckel.**

(57) Die Erfindung bezieht sich auf eine Isolierkanne (1) mit einem Gehäuse (2), in dem eine oberseitige Ausnehmung (18) zur Aufnahme eines Deckels (7) angeordnet ist, und im Grund der Ausnehmung eine Füllöffnung (3) vorgesehen ist, die durch ein Verschlussglied des Deckels (7) verschliessbar ist, wobei von der Ausnehmung seitlich ein Ausgiesser (11) ausgeht und ein Dichtungsring zwischen einander zugewandten Umfangsflächen (12, 18) der Ausnehmung (18) und des Deckels (7) angeordnet ist. Es ist der Zweck der Erfindung, die Isolierkanne so auszugestalten, dass eine kontinuierliche Abdichtung des Deckels in der Ausnehmung bei dessen leichter Handhabung gewährleistet ist. Dies wird dadurch erreicht, dass der Dichtungsring durch eine Lippendichtung (22) mit kanneneinwärts versetzter Dichtungslippe (24, 26, 27) gebildet ist, und dass die mit der Dichtungslippe (24, 26, 27) zusammenwirkende Umfangsfläche (12, 18) im Wirkungsbereich der Dichtungslippe (24, 26, 27) zylindrisch ist.

ACTORUM AG

Isolierkanne mit abgedichtetem Deckel

Die Erfindung bezieht sich auf eine Isolierkanne nach dem Oberbegriff des Anspruchs 1.

Eine Isolierkanne dieser Bauart ist in DE-OS 21 52 725 beschrieben und dargestellt.

Bei der bekannten Bauart ist der Deckel als Schraubdeckel ausgebildet, und der Ausgießer ist ein sogenannter geschlossener Ausgießer, d.h. er ist in Form einer einen Ausgießkanal umgebenden Tülle ausgestaltet.

Bei Isolierkannen besteht das Problem, daß sich in der Ausgießstellung vor der Ausgießöffnung anstauende Flüssigkeit zwischen dem Deckel und dem oberen Rand der Ausnehmung ausfließen und somit die Isolierkanne selbst und deren Umgebung verunreinigen kann.

Das vorbeschriebene Problem stellt sich insbesondere bei Isolierkannen mit geschlossenem Ausgießer, weil geschlossene Ausgießer in der Regel eine im Querschnitt kleinere Ausgießöffnung aufweisen, wie es bei offenen Ausgießern der Fall ist, und deshalb die Flüssigkeit sich vor der Ausgießöffnung vermehrt anstauen kann. Das Problem stellt sich jedoch auch bei Isolierkannen mit offenem Ausgießer, und zwar dann, wenn aufgrund der vorhandenen Konstruktion die Flüssigkeit in der Ausgießstellung der Isolierkanne sich vor der Ausgießöffnung anzustauen vermag. Die Gefahr, daß auch bei einer Isolierkanne mit offenem Ausgießer die Flüssigkeit auch ohne einen Flüssigkeitsstau vor der Ausgießöffnung über den Rand der Ausnehmung ausläuft, besteht insbesondere beim Restausgießen, wenn die Isolierkanne über einen Winkel von $90^{\circ}$ hinaus geneigt ist. Das vorgenannte Problem ist unabhängig davon, ob es sich um einen Schraubdeckel oder einen sogenannten Steckdeckel handelt, denn es tritt immer dann auf, wenn ein Spalt zwischen dem Umfang des Deckels und dem Unfang der Ausnehmung vorhanden ist.

Bei der bekannten Ausgestaltung hat man das Problem durch einen Dichtungsring runden Querschnitts zu lösen versucht, der zwischen dem Umfang des Deckels und dem Umfang der Ausnehmung in einer im Deckel angeordneten Nut eingesetzt ist, deren Breite ein Mehrfaches der Breite des Dichtungsringes beträgt. Aufgrund dieser vergrößerten Breite kann der Deckel durch Aufschrauben aus seiner Verschlußstellung in seine Ausgießstellung angehoben werden, wobei in der Ausgießstellung der Dichtungsring von der unteren Nutschulter gegen eine vom Umfang der Ausnehmung vorspringende Dichtungsschulter gepreßt wird, wodurch die Abdichtung gewährleistet sein soll. Die Dichtungsschulter ist so bemessen, daß durch weiteres Aufschrauben des Deckels der an der Dichtungsschulter spürbare Druckpunkt überwunden wird und der Deckel vollends aufgeschraubt werden kann.

Die bekannte Ausgestaltung ist aus mehreren Gründen nachteilig. Zum einen besteht die Gefahr, daß der Dichtungsring nach mehrfachem völligen Herausschrauben des Deckels an der Dichtungsschulter aufgrund wiederholter Quetschung beschädigt wird und deshalb die Abdichtung nicht mehr gewährleistet ist. Zum anderen ist die Abdichtung überhaupt nur dann gewährleistet, wenn der Dichtungsring gegen die Dichtungsschulter gepreßt ist. Das bedeutet, daß der Deckel in einer Zwischenstellung nicht abgedichtet ist, in der ebenfalls ausgegossen werden kann. In einem solchen Fall ist also das Auslaufen von Flüssigkeit über den Rand der Ausnehmung möglich. Ein weiterer Nachteil ist darin zu sehen, daß es nicht auszuschließen ist, daß der Dichtungsring sich an der Dichtungsschulter hindurchquetscht, bevor der Deckel sich in seiner Ausgießstellung befindet. In einem solchen Fall wäre ebenfalls das Auslaufen von Flüssigkeit über den Rand der Ausnehmung möglich. Außerdem ist bei der bekannten Ausgestaltung die Handhabung des Deckels beeinträchtigt, weil das Zusammenpressen bzw. Quetschen des Dichtungsringes die Verstellbewegung des Deckels in deutlich spürbarem Maße hemmt. Ein solcher Widerstand ist in der Verschlußstellung des Deckels zu akzeptieren, jedoch nicht in einer Offenstellung.

Der Erfindung liegt die Aufgabe zugrunde, eine Isolierkanne der eingangs bezeichneten Bauart so auszugestalten, daß eine kontinuierliche Abdichtung des Deckels in der Ausnehmung bei dessen leichter Handhabung gewährleistet ist.

Diese Aufgabe wird durch die im Anspruch 1 enthaltenen Merkmale gelöst.

Bei der erfindungsgemäßen Ausgestaltung kommt eine Lippendichtung zum Einsatz, mit der die Abdichtung sowohl eines solchen Deckels gewährleistet ist, der ein eigens verstellbares Verschlußglied aufweist und deshalb beim Öffnen und Schließen nicht verstellt wird, als auch eines solchen, der zum Öffnen und Schließen in der Ausnehmung verstellt wird, z.B. durch Schrauben. Der Einsatz einer Lippendichtung ist deshalb vorteilhaft, weil bei einer solchen ein nur verhältnismäßig geringer Verformungswiderstand entsteht und deshalb beim Einsetzen oder Entfernen, insbesondere Öffnen und Schließen, des Deckels ein kaum spürbarer Mehraufwand an Kraft erforderlich ist. Wenn die Isolierkanne sich in der Ausgießstellung befindet und der Flüssigkeitsspiegel über die Lippendichtung hinaus ansteigt, dann steht aufgrund der Flüssigkeitssäule ein Druck an der Lippendichtung an, der die Dichtungslippe vermehrt gegen die Dichtungsfläche vorspannt und somit eine mit zunehmendem Druck verbesserte Abdichtung bewirkt. Dies ist aufgrund der erfindungsgemäßen Ausgestaltung gewährleistet, weil die Dichtungslippe kanneneinwärts versetzt ist und deshalb der vorhandene Flüssigkeitsdruck sich in vorbeschriebener Weise auswirken kann.

Bei der Ausgestaltung nach Anspruch 2 ist sowohl eine Längsverschiebung der Lippendichtung als auch deren Abrollung dadurch verhindert, daß die Lippendichtung längs der Deckelachse unverschiebbar in der Nut gehalten ist.

Die erfindungsgemäße Ausgestaltung läßt sich sowohl durch eine Anordnung der Lippendichtung in der Umfangsfläche des Deckels als auch in der Umfangsfläche der Ausnehmung verwirklichen. In beiden Fällen lassen sich die vorgenannten Vorteile erreichen. Die Anordnung der Lippendichtung am Deckel ist deshalb aus einem besonderen Grunde vorteilhaft, weil ein solcher Deckel sowohl in Isolierkannen mit geschlossenem als auch mit offenem Ausgießer einsetzbar ist. Bei dieser Ausgestaltung bedarf es allerdings einer Einführungsschräge am oberen Rand der Ausnehmung, um beim Einsetzen des Deckels die Dichtungslippe ohne die Gefahr von Beschädigungen an die Dichtungsfläche heranzuführen. Eine solche Einführungsschräge ist nicht notwendig, wenn die Lippendichtung in der Umfangsfläche der Ausnehmung angeordnet ist.

Die im Anspruch 5 und die im Anspruch 6 enthaltenen Merkmale tragen dazu bei, daß die Lippendichtung beim Einschrauben des Deckels keine Gewindegänge zu überfahren braucht. Sie liegt in allen Stellungen des Deckels zwischen dessen Verschlußstellung und Ausgießstellung an einer zylindrischen Dichtungsfläche an und beim weiteren Herausschrauben des Deckels gelangt die Lippendichtung von der zylindrischen Dichtungsfläche unmittelbar ins Freie.

Wenn ein geschlossener Ausgießer gemäß Anspruch 7 vorhanden ist, ist es zur Vermeidung der eingangs beschriebenen Nachteile erforderlich, daß die Lippendichtung oberhalb des Ausgießkanals angeordnet ist. Bei offenen Ausgießern ist es aus gleichem Grunde vorteilhaft, die Lippendichtung möglichst nahe am oberen Rand der Ausnehmung anzuordnen.

Die vorbeschriebene progressive Dichtwirkung wird bei einer Ausbildung gemäß Anspruch 8 verstärkt.

Bei der erfindungsgemäßen Ausgestaltung ist dafür Sorge zu tragen, daß auch der der Dichtungslippe abgewandte Innen- bzw. Außenumfangsrand abgedichtet ist. Möglichkeiten hierzu sind z.B. ein dichtes Einpressen der Lippendichtung in die Nut und/oder ein Verkleben. Bei der Ausgestaltung nach Anspruch 9 weist die Lippendichtung zwei Dichtlippen und einen U-, V- oder Y-förmigen Querschnitt auf, wodurch ohne zusätzliche Maßnahmen sowohl die radial innere als auch die radial äußere Abdichtung gewährleistet ist. Eine weitere vorteilhafte Maßnahme zum Erreichen dieses Zwecks ist auch im Anspruch 10 enthalten. Letztere führt auch zu einer einfachen und konstengünstigen Herstellung, weil der Deckel und/oder das Gehäuse aus Kunststoff hergestellt werden können und sich deshalb eine Lippendichtung beim Spritzgießen leicht und preiswert anformen läßt.

Nachfolgend werden Ausführungsbeispiele der Erfindung anhand einer vereinfachten Zeichnung näher beschrieben. Es zeigt

Fig. 1 eine erfindungsgemäß ausgestaltete Isolierkanne im senkrechten Querschnitt als erstes Ausführungsbeispiel;

Fig. 2 die mit x gekennzeichnete Einzelheit in vergrößerter Darstellung;

Fig. 3 und 4 ein zweites und drittes Ausführungsbeispiel der Erfindung.

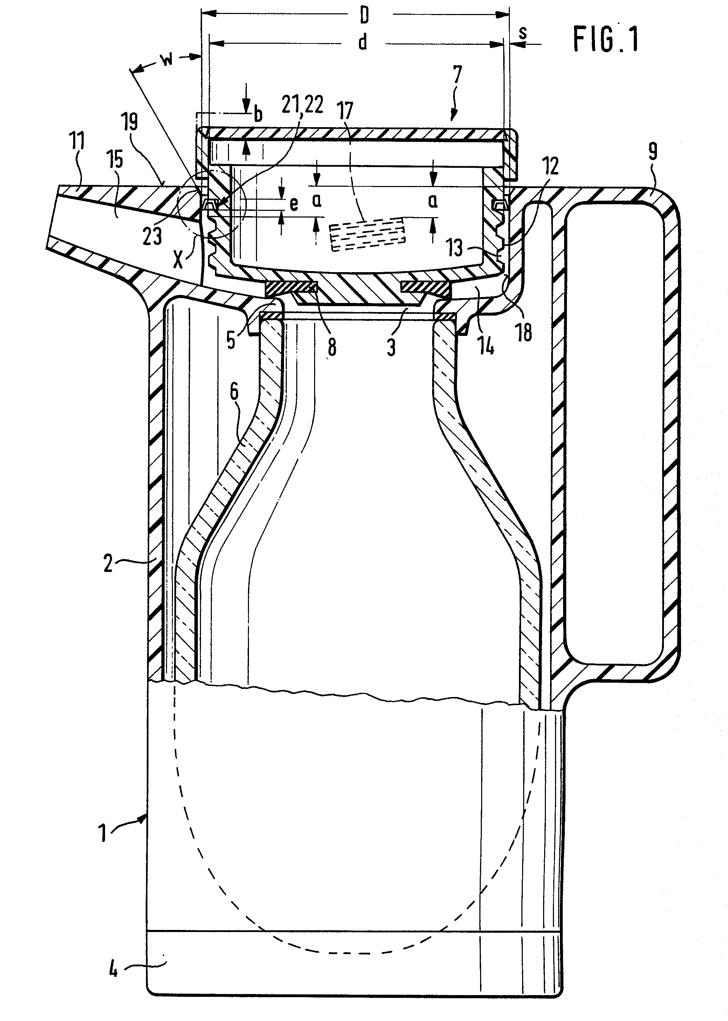

Die wesentlichen Teile der in Fig. 1 allgemein mit 1 bezeichneten Isolierkanne sind ein aus Kunststoff bestehendes Schutzgehäuse 2 mit einer oberseitigen Füllöffnung 3, ein unterhalb der Füllöffnung 3 durch ein Bodenteil 4 gegen eine innere Schulter 5 gespannter Isoliereinsatz 6 mit einer zur Füllöffnung 3 im Schutzgehäuse 2 koaxialen Öffnung gleichen Querschnitts und ein allgemein mit 7 bezeichneter Verschlußdeckel, an dessen Unterseite ein Dichtungsring 8 in bekannter Weise gehalten ist, der in der dargestellten Verschlußstellung des Verschlußdeckels 7 dichtend auf der inneren Schulter 5 aufliegt.

An das Schutzgehäuse 2 sind einstückig ein Griff 9 und ein geschlossener Ausgießer 11 angeformt. Der Verschlußdeckel 7 weist auf seiner Umfangsfläche 12 ein Außengewinde 13 auf und ist in einer sich oberhalb der Füllöffnung 3 angeordneten Ausnehmung 14 eingeschraubt, von der seitlich und auf der dem Griff 9 entgegengesetzten Seite ein Ausgießkanal 15 innerhalb des geschlossenen Ausgießers 11 radial und schräg aufwärts ausgeht. Die Ausnehmung 14 weist anstelle eines Innengewindes andeutungsweise dargestellte Innengewinde - Segmente 17 auf, die von deren Umfangsfläche 18 radial vorspringen und diametral einander gegenüberliegend oder sternförmig auf der Umfangsfläche 18 verteilt angeordnet sind.

Das oberste Segment 17 befindet sich in einem Abstand von der Oberseite 19 des Schutzgehäuses 2, der mit a bezeichnet ist. Die Anordnung ist so getroffen, daß in der dargestellten Verschlußstellung des Verschlußdeckels 7 der oberste Gewindegang des Außengewindes 13 von der Oberseite 19 ebenfalls den Abstand a aufweist. Der Abstand a ist wenigstens so groß bemessen, wie die Distanz b zwischen der dargestellten Verschlußstellung des Verschlußdeckels 7 und dessen Ausgießstellung, in der der Dichtungsring 8 ebenfalls um das Maß b von der Dichtfläche auf der inneren Schulter 5 abgehoben ist. Oberhalb des Außengewindes 13, also im gewindelosen Bereich a ist eine Nut 21 in der Umfangsfläche 12 eingearbeitet, in der eine Lippendichtung 22 aufgenommen ist. Es handelt sich um eine Lippendichtung 22 mit zwei Dichtungslippen und mit einem U-, V- bzw. trapezförmigen Querschnitt, wobei die Dichtungslippen zum Innenraum der Isolierkanne hinweisen. Während die radial innere Dichtungslippe der Lippendichtung 22 am Grund der Nut 21 anliegt, liegt die radial äußere Dichtungslippe an der Umfangsfläche 18 der Ausnehmung 14 an, die mit Ausnahme der Segmente 17 zylindrisch ist und am oberen Rand der Ausnehmung 14 im Sinne einer Einführungsschräge 23 von einem Winkel w von etwa 30° angefast ist. Die Anordnung ist so getroffen, daß die Lippendichtung 22 im gesamten Verstellbereich zwischen der Verschlußstellung des Deckels und dessen Ausgießstellung am zylindrischen Abschnitt der Umfangsfläche 18 anliegt und erst bei einem Ausschrauben des Verschlußdeckels 7 über seine Ausgießstellung hinaus ins Freie gelangt. Beim Einschrauben des Verschlußdeckels 7 wird die Dichtungslippe der Lippendichtung 22 störungsfrei durch die Einführungsschräge 23 in die Ausnehmung 14 eingeführt. Die radial äußere Dichtungslippe ragt geringfügig von der Umfangsfläche 12 des Verschlußdeckels 7 vor und liegt mit einer elastischen Vorspannung an der Umfangsfläche 18 der Ausnehmung 14 an, deren Durchmesser D dem Außendurchmesser des Muttergewindes entspricht. Der Außendurchmesser d der Umfangsfläche 12 des Verschlußdeckels 7 ist um das erforderliche Bewegungsspiel s kleiner bemessen. Die elastische Vorspannung der Lippendichtung 22 wird dadurch hervorgerufen, daß die Lippendichtung 22 in der eingebauten Position geringfügig radial zusammengedrückt ist. Die Abdichtung des Verschlußdeckels 7 in der Ausnehmung 14 ist somit in allen Stellungen des Verschlußdeckels 7 zwischen der Verschlußstellung der Ausgießstellung gewährleistet.

Wenn in der stark geneigten Ausgießstellung der Isolierkanne 1 die Flüssigkeit über die Lippendichtung ansteigt, strömt die Flüssigkeit in die Lippendichtung 21 hinein, wodurch die Dichtungslippen radial nach außen bzw. innen beaufschlagt werden und sich spreizen und in Abhängigkeit vom Flüssigkeitsdruck progressiv abdichten.

Die Dicke e der Lippendichtung 22 entspricht der Breite der Nut 21. Die Lippendichtung 22 ist somit schließend in der Nut 21 aufgenommen.

Der Abstand f der Dichtungslippe 24 von der der Oberseite 19 des Schutzgehäuses 2 entspricht wenigstens der Dicke e der Distanz b und der Länge g der Einführungsschräge 23.

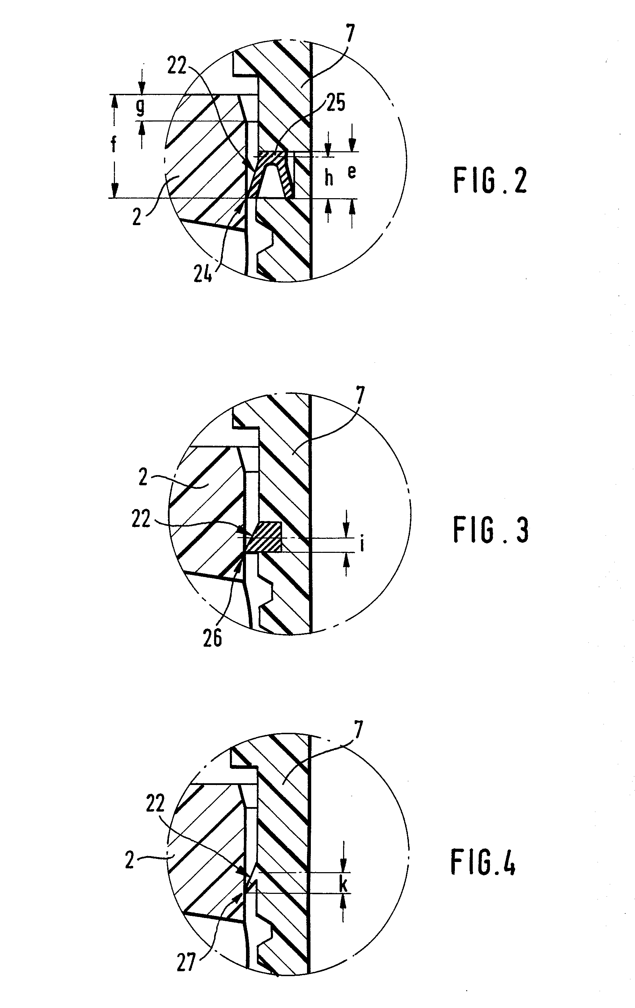

Beim Ausführungsbeispiel gemäß Fig. 1 und 2 kommt eine Lippendichtung 22 zum Einsatz, deren radial äußere Dichtungslippe 24 aufgrund der axialen Erstreckung um ein beträchtliches Maß h vom sie tragenden Dichtungskörper 25 - bezüglich dessen Mitte - zum Innenraum der Isolierkanne versetzt ist.

Im Rahmen der Erfindung erfüllt jedoch auch die in Fig. 3 dargestellte Lippendichtung 22 den erfindungsgemäßen Zweck, deren Dichtungslippe 26 um ein bedeutend kleineres Maß i zum Kanneninnern versetzt ist und in der dem Kanneninnern zugewandten Seitenfläche liegt.

Beim dritten Ausführungsbeispiel gemäß Fig. 4 ist die Dichtungslippe 27 einstückig an den aus Kunststoff bestehenden Verschlußdeckel 7 angeformt. Das Versetzungsmaß dieser Ausgestaltung ist mit k bezeichnet. Die Dichtungslippe 27 könnte auch an das Gehäuse 2 angeformt und die Dichtungslippen 24,26 im Gehäuse 2 eingesetzt sein.

Bei allen Ausführungsbeispielen stellt sich eine verstärkte Abdichtung ein, wenn ein Flüssigkeitsdruck innenseitig an der Lippendichtung 22 ansteht. Die Ausgestaltungen, bei denen die Dichtungslippe 24,27 über die dem Kanneninnenraum zugewandte Seite des sie tragenden Körpers hinaus versetzt ist (Fig. 2 und 4), können sich die Dichtungslippen um größere Maße radial anpassen. Sie eignen sich deshalb im Hinblick auf vorgegebene Toleranzen besonders bei Isolierkannen aus Kunststoff.

**0 198 457**

PATENTANWÄLTE
Dipl.-Ing. H. MITSCHERLICH
Dipl.-Ing. K. GUNSCHMANN
Dipl.-Ing.Dr.rer.nat. W. KÖRBER
Dipl.-Ing. J. SCHMIDT-EVERS
Dipl.-Ing. W. MELZER
EUROPEAN PATENT ATTORNEYS

Telefon (089) 29 66 84-86
Telex 523 155 mitsh d
Telegramme Patentpaap
Telecopier (089) 29 39 63
Psch-Kto. Mchn. 195 75-803
EPA-Kto. 28 000 206

Steinsdorfstraße 10
D-8000 München 22

ROTPUNKT
Dr. Anso Zimmermann
Industriestraße

6434 Niederaula/Bad Hersfeld

A n s p r ü c h e
----------------------------

1. Isolierkanne mit einem Gehäuse, in dem eine oberseitige
   Ausnehmung zur Aufnahme eines Deckels angeordnet ist, und
   im Grund der Ausnehmung eine Füllöffnung vorgesehen ist,
   die durch ein Verschlußglied des Deckels verschließbar
   ist, wobei von der Ausnehmung seitlich ein Ausgießer ausgeht und ein Dichtungsring zwischen einander zugewandten
   Umfangsflächen der Ausnehmung und des Deckels angeordnet
   ist,
   dadurch   g e k e n n z e i c h n e t ,
   daß der Dichtungsring durch eine Lippendichtung (22) mit
   kanneneinwärts versetzter Dichtungslippe (24,26,27) gebildet ist, und daß die mit der Dichtungslippe (24,26,27) zusammenwirkende Umfangsfläche (12,18) im Wirkungsbereich
   der Dichtungslippe (24,26,27) zylindrisch ist.

2. Isolierkanne nach Anspruch 1,
   dadurch   g e k e n n z e i c h n e t ,
   daß die Lippendichtung (22) in einer Nut (21) axial unverschiebbar gehalten ist.

3. Isolierkanne nach Anspruch 2,
   dadurch   g e k e n n z e i c h n e t ,
   daß die Nut (21) in der Umfangsfläche (12) des Deckels
   (7) angeordnet ist und die Umfangsfläche (18) der Ausnehmung (14) am oberen Rand eine Einführungsschräge (23)
   aufweist.

4. Isolierkanne nach Anspruch 1 oder 2,
   dadurch   g e k e n n z e i c h n e t ,
   daß die Lippendichtung (22) in der Umfangsfläche (18)
   der Ausnehmung (14) angeordnet ist.

5. Isolierkanne nach einem der Ansprüche 1 bis 4,
   dadurch   g e k e n n z e i c h n e t ,
   daß der Deckel (7) ein Schraubdeckel ist und die Lippendichtung (22) oberhalb des Gewindes (13,17) angeordnet ist.

6. Isolierkanne nach einem der Ansprüche 1 bis 5,
   dadurch   g e k e n n z e i c h n e t ,
   daß der Deckel (7) ein Schraubdeckel ist und der
   Durchmesser (D) der Ausnehmung (14) dem Außendurchmesser des Muttergewindes entspricht.

7. Isolierkanne nach einem der Ansprüche 1 bis 6,
   dadurch   g e k e n n z e i c h n e t ,
   daß der Ausgießer (11) ein geschlossener Ausgießer
   (11) ist und die Lippendichtung (22) oberhalb des Ausgießkanals (15) angeordnet ist.

8. Isolierkanne nach einem der Ansprüche 1 bis 8,
   dadurch   g e k e n n z e i c h n e t ,
   daß die Dichtungslippe (24,27) über die kanneneinwärts
   gerichtete Seite der Lippendichtung (22) hinaus versetzt ist.

9. Isolierkanne nach einem der Ansprüche 1 bis 6, dadurch  g e k e n n z e i c h n e t , daß die Lippendichtung (22) zwei Dichtlippen (24) und einen U-, V- oder Y-förmigen Querschnitt aufweist.

10. Isolierkanne nach einem der Ansprüche 1 bis 8, dadurch  g e k e n n z e i c h n e t , daß die Lippendichtung (22) einstückig an das Gehäuse (2) oder den Deckel (7) angeformt ist (Fig. 4).

FIG.1

FIG . 2

FIG . 3

FIG.4

Europäisches Patentamt

**EUROPÄISCHER RECHERCHENBERICHT**

**0 198 457**

EP 86 10 5071

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-2 152 725 (ZITZMANN & CO.) * Anspruch 2; Abbildungen 9-12 * | 1 | A 47 J 41/02 |
| A | | 5,7,10 | |
| | --- | | |
| Y | US-A-2 925 187 (BRAMMING) * Abbildungen 11,12; Spalte 8, Zeilen 58-62 * | 1 | |
| A | | 3,8,10 | |
| | --- | | |
| A | GB-A- 678 830 (MAYS) * Abbildung 4; Seite 3, Zeilen 1-3 * | 1-3,9 | |
| | --- | | RECHERCHIERTE SACHGEBIETE (Int. Cl.4) |
| A | DE-U-8 411 707 (SID-WERK GmbH) * Abbildungen 1,3-5 * | 1-6 | A 47 J |
| | --- | | |
| A | US-A-3 140 799 (MEHR) * Abbildungen 6,7 * | 1-3 | |
| | ----- | | |

Der vorliegende Recherchenbericht wurde für alle Patentansprüche erstellt.

| Recherchenort DEN HAAG | Abschlußdatum der Recherche 17-07-1986 | Prüfer BEUGELING G.L.H. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82